# EUROPÄISCHE PATENTSCHRIFT

(11) **EP 3 599 385 B1**
(45) Veröffentlichungstag und Bekanntmachung des Hinweises auf die Patenterteilung: **14.06.2023**
(21) Anmeldenummer: 19187381.9
(22) Anmeldetag: 19.07.2019
(51) Int. Cl.: F16B 21/16, F16B 21/12, F16B 7/18

(54) **KUGELSPERRBOLZEN MIT KOPFNAHER ARRETIERUNG**
BALL LOCKING BOLT WITH HEAD RETENTION
BOULON DE VERROUILLAGE À BILLES À BLOCAGE AU VOISINAGE DE LA TÊTE

(30) Priorität: 27.07.2018 DE 102018212599
(43) Veröffentlichungstag der Anmeldung: 29.01.2020
(73) Patentinhaber: ICG GmbH & Co. KG, 72172 Sulz am Neckar (DE)
(72) Erfinder: WAGNER, Michael André, 72175 Dornhan (DE); PLOCHER, Klaus, 72160 Horb-Dettingen (DE)
(74) Vertreter: Kohler Schmid Möbus Patentanwälte

(56) Entgegenhaltungen:
- EP-A1- 2 801 726
- DE-U1-202007 009 225
- US-A- 4 016 914
- US-A1- 2014 030 011
- US-A1- 2018 058 490

## Beschreibung

Die Erfindung betrifft eine Baugruppe, umfassend einen Kugelsperrbolzen und wenigstens zwei gegen Scherung zu sichernde Strukturen, mit dem Kugelsperrbolzen umfassend
- einen Bedienabschnitt, wobei der Bedienabschnitt einen Griff ausbildet, an dem ein Bediener den Kugelsperrbolzen anfassen kann,
- einen Achsabschnitt für einen Eingriff in die wenigstens zwei Strukturen
- eine Arretiermechanik,

wobei der Bedienabschnitt und der Achsabschnitt starr miteinander verbunden sind und der Bedienabschnitt an seinem dem Achsabschnitt zugewandten Ende eine Anlagefläche, insbesondere einen Bund, zur Anlage an eine der Strukturen aufweist,
wobei am Bedienabschnitt ein Bedienknopf ausgebildet ist, mit dem die Arretiermechanik betätig werden kann und der in einer axialen Richtung vom Bediener eingedrückt werden kann,
wobei mit der Arretiermechanik wenigstens eine Sperrkugel betätigt werden kann,
und wobei in einer Grundposition der Arretiermechanik die wenigstens eine Sperrkugel durch eine Ausnehmung im Achsabschnitt aus dem Achsabschnitt radial herausragt, und in einer Freigabeposition die wenigstens eine Sperrkugel radial hinter die Ausnehmung zurückfallen kann.

Eine solche Baugruppe ist beispielsweise durch das Datenblatt "K0363 Kugelsperrbolzen selbstsichernd" der Heinrich Kipp Werk KG, heruntergeladen von www.kipp.com am 3.7.2018, bekannt geworden.

Kugelsperrbolzen dienen dazu, wenigstens zwei Strukturen gegen Scherung zu sichern. Zur Sicherung der Strukturen durchragt ein Achsabschnitt des Kugelsperrbolzens die Strukturen oder ragt in diese hinein, wodurch ein gegenseitiges Verschieben der Strukturen quer zum Achsabschnitt blockiert wird.

Um den Kugelsperrbolzen gegen ein Verlieren zu sichern, weist der Kugelsperrbolzen eine Arretiermechanik mit wenigstens einer Sperrkugel an einem unteren Ende, das von einem Bedienabschnitt des Kugelsperrbolzens abgewandt ist, auf, vgl. den erwähnten Kugelsperrbolzen K0363 der Heinrich Kipp Werk KG. Der Kugelsperrbolzen hintergreift mit dem Bedienabschnitt die vorderste der gesicherten Strukturen, und mit der Sperrkugel, die in einer Grundposition der Arretiermechanik des Kugelsperrbolzens aus einer Ausnehmung am Achsabschnitt herausragt, die hinterste zu sichernde Struktur. In der hintersten zu sichernden Struktur kann dabei auch eine Aufnahmebuchse eingeschraubt sein, die von der Sperrkugel an einer Stufe hintergriffen wird; eine solche Aufnahmebuchse ist beispielsweise aus dem Datenblatt "K1065 Aufnahmebuchsen für Kugelsperrbolzen" der Heinrich Kipp Werk KG, heruntergeladen von www.kipp.com am 3.7.2018, bekannt. In einer Freigabeposition der Arretiermechanik fällt die Sperrkugel hinter die Ausnehmung zurück, so dass der Kugelsperrbolzen durch die Strukturen durchgefädelt werden kann. Meist umfasst die Arretiermechanik zwei gegenüberliegende Sperrkugeln für die Verliersicherung.

Üblicherweise ist mit einem am Bedienabschnitt angeordneten Bedienknopf ein Spannachselement (Spannachse) im Achsabschnitt axial verfahrbar. Das Spannachselement weist einen ersten axialen Abschnitt und einen zweiten axialen Abschnitt, der gegenüber dem ersten axialen Abschnitt radial zurückgesetzt ist, auf. In der Grundposition drückt der erste axiale Abschnitt die wenigstens eine Sperrkugel radial nach außen und in der Freigabeposition kann die wenigstens eine Sperrkugel auf den zweiten axialen Abschnitt ("in die Schwebe") zurückfallen.

Um mit dem Bedienknopf die Sperrkugeln am unteren Ende des Achsabschnitts betätigen zu können, durchragt das Spannachselement im Wesentlichen den gesamten Achsabschnitt. Für die Führung des Spannachselement wird in den Achsabschnitt eine axiale Bohrung eingebracht, die sich entsprechend im Wesentlichen über die gesamte Länge des Achsabschnitt erstreckt.

Die axiale Länge des Achsabschnitts wird durch die gesamte Dicke der zu sichernden Strukturen bestimmt. Mit zunehmender gesamter Dicke der zu sichernden Strukturen wird die Fertigung der axialen Bohrung im Bauteil des Achsabschnitts immer schwieriger. Mit gängigen Bohrverfahren können Längen eines Achsabschnitts mit Bohrung bis ca. 115 mm gefertigt werden; für größere Längen müsste so genanntes Tieflochbohren eingesetzt werden, was die Herstellungskosten eines Kugelsperrbolzens stark verteuern würde. Bei Fertigung eines Achsabschnitts durch Rohrziehen könnten größere Längen erreicht werden, es würde aber nicht die notwendige Fertigungsgenauigkeit erreicht.

Die US 4,016,914 beschreibt einen Befestiger für Platten mit einer Selbstarretierung. Der Befestiger umfasst einen Bolzen, an dem vorderenends ein Gewinde ausgebildet ist. Der Bolzen wird durch eine äußere Platte und durch eine innere, ortsfeste Platte geführt. An der Rückseite der inneren Platte ist eine Korbmutter mit einem Innengewinde befestigt, in das der Bolzen eingeschraubt wird. Hinterenends besitzt der Bolzen einen konischen Kragen zur Anlage an die äußere Platte. Mit dem Bolzen, der in seiner Endposition vollständig in der äußeren Platte versenkt ist, werden die äußere Platte und die innere Platte axial verspannt. Im Bolzen ist ein federbelasteter Stößel geführt, mit dem zwei Kugeln betätig werden können; in einer Grundposition sind die Kugeln radial nach außen gedrückt und können eine an der Korbmutter befestigte Scheibe hintergreifen. Der Stößel ragt hinterenends in eine Werkzeug-Ausnehmung des Bolzens.

Die US 2018/0058490 A1 beschreibt einen modularen Sperrriegel. Der Sperrriegel (locking pin) ist in einem Arbeitstisch verschraubt und durchgreift mit einem Ende ein Werkstück, welches eine Aufnahme für eine Buchse aufweist. Diese Buchse ist am Werkstück mittels zweiter Schrauben befestigt. Sperrkugeln des Sperrriegels können je nach Stellung eines Untersetzers (support cup) eine ringförmige Kante (annular rim) der Buchse hintergreifen.

Aus der DE 20 2007 009 225 U1 ist ein Überbrückungsdübel bekannt geworden, wobei ein Außenteil aus einem Außenteil-Unterteil und einem Außenteil-Oberteil zusammengesetzt ist, die fest zusammenfügbar sind, beispielsweise durch Einschrauben. Das Außenteil-Unterteil kann beispielsweise spreizdübelartig ausgebildet sein.

Die EP 2 801 726 A1 beschreibt einen Sperrbolzen mit einem Führungsgehäuse, in welchem ein Bolzen axial verstellbar gelagert ist, sowie mit einem Abschlussteil, welches eine Einsetztiefe des Führungsgehäuses begrenzt, und mit einer axial verstellbar geführten Stellhülse. An der Stellhülse ist eine Hinterschneidung vorgesehen, in die radial verstellbare Haltekugeln einrücken können. Nahe des dem Abschlussteil abgewandten Endes des Führungsgehäuses sind radial verstellbare Sperrkugeln angeordnet.

Aus der US 2014/0030011 A1 ist ein Sperrbolzen mit Schutzkappe bekannt geworden. In einem rohrförmigen Körper ist eine Spindel axial verschiebbar. Die Spindel besitzt ein erstes axiales Ende zur Betätigung, und nahe dem gegenüberliegenden axialen Ende sind kugelförmige Sperrelemente vorgesehen, die je nach Position der Spindel radial aus- und einfahrbar sind.

### Aufgabe der Erfindung

Es ist Aufgabe der Erfindung, eine Baugruppe mit zwei zu sichernden Strukturen und einem Kugelsperrbolzen zur Verfügung zu stellen, wobei mit dem Kugelsperrbolzen bei niedrigen Herstellungskosten auch große gesamte Dicken der Strukturen gegen Scherung gesichert werden können

### Kurze Beschreibung der Erfindung

Diese Aufgabe wird auf überraschend einfache, aber wirkungsvolle Art gelöst durch eine Baugruppe der eingangs genannten Art, die dadurch gekennzeichnet ist,
dass die wenigstens eine Sperrkugel samt zugehöriger Ausnehmung in einer oberen Hälfte des Achsabschnitts ausgebildet ist, die dem Bedienabschnitt zugewandt ist,
und dass der Achsabschnitt eine erste Struktur durchragt,
wobei die wenigstens eine Sperrkugel in der Grundposition eine Strukturkante der ersten Struktur hintergreift,
und wobei der Achsabschnitt weiterhin eine zweite Struktur, die an einer dem Bedienabschnitt abgewandten Seite der ersten Struktur angeordnet ist, durchragt oder in die zweite Struktur hineinragt, und die zweite Struktur von der wenigstens einen Sperrkugel nicht hintergriffen wird,
insbesondere wobei die Anlagefläche an der ersten Struktur anliegt. Bei dieser einfachen Baugruppe kann eine praktisch beliebige gesamte Dicke von Strukturen gesichert werden, ohne dass im Achsabschnitt eine entsprechend lange Bohrung nötig wäre.

Ebenso fällt in den Rahmen der vorliegenden Erfindung eine Baugruppe, die dadurch gekennzeichnet ist,
dass die wenigstens eine Sperrkugel samt zugehöriger Ausnehmung in einer oberen Hälfte des Achsabschnitts ausgebildet ist, die dem Bedienabschnitt zugewandt ist,
dass die Baugruppe weiterhin umfasst ein Adapterbauteil,
wobei das Adapterbauteil aufweist
   - eine Adapterausnehmung zum Durchführen des Achsabschnitts, und
   - eine Sicherungskante in der Adapterausnehmung zum Hintergreifen des Adapterbauteils mit der wenigstens einen Sperrkugel in der Grundposition der Arretiermechanik,
dass das Adapterbauteil an einer ersten Struktur starr befestigt ist, insbesondere angeschraubt oder angeschweißt ist,
wobei die wenigstens eine Sperrkugel in der Grundposition die Sicherungskante der Adapterausnehmung des Adapterbauteils hintergreift,
wobei der Achsabschnitt das Adapterbauteil und die erste Struktur durchragt,
und wobei der Achsabschnitt weiterhin eine zweite Struktur, die an einer dem Adapterbauteil und dem Bedienabschnitt abgewandten Seite der ersten Struktur angeordnet ist, durchragt oder in die zweite Struktur hineinragt, und die zweite Struktur von der wenigstens einen Sperrkugel nicht hintergriffen wird, insbesondere wobei die Anlagefläche an einer Gegenfläche des Adapterbauteils anliegt. Bei dieser Baugruppe kann eine praktisch beliebige gesamte Dicke von Strukturen gesichert werden, ohne dass im Achsabschnitt eine entsprechend lange Bohrung nötig wäre, und ohne dass eine Struktur eine hintergreifbare Strukturkante für die wenigstens eine Sperrkugel zur Verfügung stellen muss. Gegebenenfalls kann die Anlagefläche auch an der ersten Struktur anliegen (etwa an einer Konterfläche der ersten Struktur), insbesondere wenn eine Einschraubtiefe des Adapterbauteils in der ersten Struktur eingestellt werden soll. Mit dem Adapterbauteil ist es möglich, eine Verliersicherung an der vordersten, also Bedienabschnitt-nächsten Struktur (=erste Struktur) einzurichten, ohne diese Struktur auf den verwendeten Kugelsperrbolzen abzustimmen. Insbesondere braucht an dieser Struktur keine Strukturkante zum Hintergreifen durch die wenigstens eine Sperrkugel eingerichtet zu werden, was oft schwierig wäre. Stattdessen genügt es, das Adapterbauteil an dieser Struktur in beliebiger Weise zu befestigen.

Die Erfindung sieht vor, dass die wenigstens eine Sperrkugel samt zugehöriger Ausnehmung in einer oberen Hälfte des Achsabschnitts ausgebildet ist, die dem Bedienabschnitt zugewandt ist.

Im Rahmen der vorliegenden Erfindung wurde erkannt, dass für eine Verliersicherung eines Kugelsperrbolzens es in der Regel nicht nötig ist, die hinterste Struktur mit der wenigstens einen Sperrkugel zu hintergreifen. Eine Verliersicherung kann auch an einer weiter vorne liegenden Struktur, insbesondere auch der vordersten Struktur, erfolgen. Dann brauchen aber die wenigstens eine Sperrkugel und die zugehörige Ausnehmung nicht nahe dem unteren (bedienteilfernen) Ende ausgebildet werden, sondern können erfindungsgemäß nahe dem oberen (bedienteilnahem) Ende des Achsabschnitts eingerichtet werden.

Werden die wenigstens eine Sperrkugel und die zugehörige Ausnehmung nahe dem oberen Ende des Achsabschnitts ausgebildet, nämlich in der oberen (bedienteilnahen) Hälfte des Achsabschnitts, oder bevorzugt in einem oberen (bedienteilnahen) Drittel des Achsabschnitts, oder besonders bevorzugt in einem oberen (bedienteilnahen) Viertel des Achsabschnitts, braucht für eine Führung einer Spannachse zur Betätigung der Sperrkugel lediglich eine entsprechend geringere Länge im Achsabschnitt gebohrt zu werden. Geringe Längen von Bohrungen sind viel einfacher und kostengünstiger zu fertigen als große Längen, insbesondere ohne Tieflochbohren.

Für die Sicherung gegen Scherung ist es lediglich nötig, mit dem Achsabschnitt alle zu sichernden Strukturen zu durchragen oder zumindest in diese hineinzuragen (bei der hintersten Struktur). In typischen Anwendungen von Kugelsperrbolzen sind nämlich die zu sichernden Strukturen in axialer Richtung des Achsabschnitts relativ zueinander ohnehin nicht beweglich (bzw. anderweitig als durch den Kugelsperrbolzen festgelegt), sondern nur quer zu dieser axialen Richtung ("Scherung"); ansonsten wäre der Einsatz eines Tragbolzens nötig. Das Durchragen der Strukturen oder das Hineinragen in die Strukturen für die Sicherung gegen Scherung kann aber ohne weiteres mit einem Teil des Achsabschnitts jenseits der wenigstens einen Sperrkugel und ihrer Ausnehmung erfolgen, also in einem Teil, in welchem keine Spannachse und entsprechend keine Bohrung für die Spannachse benötigt wird.

Im Rahmen der Erfindung ist es entsprechend möglich, praktisch beliebig große gesamte Dicken von Strukturen durch einen entsprechend langen Achsabschnitt gegen Scherung zu sichern, ohne diesen Achsabschnitt mit einer entsprechend langen Bohrung für eine Spannachse versehen zu müssen. Vielmehr reicht eine Bohrung in einem kurzen, bedienteilnahen Teil des Achsabschnitts für die Spannachse aus.

Man beachte, dass eine typische axiale Länge eines Achsabschnitts eines Kugelsperrbolzens im Rahmen der Erfindung bei 250 mm oder mehr, insbesondere 320 mm oder mehr, oder sogar 400 mm oder mehr, beträgt. Eine Bohrung für die Spannachse im Bereich des Achsabschnitts hat im Rahmen der Erfindung meist eine Länge von 60 mm oder weniger, bevorzugt 40 mm oder weniger, oder besonders bevorzugt 30 mm oder weniger.

Typischerweise werden am Kugelsperrbolzen zwei Sperrkugeln an gleicher axialer Position, radial einander gegenüberliegend, eingesetzt. Der Achsabschnitt ist jenseits der Sperrkugel samt Ausnehmung typischerweise vollständig oder zum größten Teil aus Vollmaterial gefertigt, wodurch eine besonders hohe Scherfestigkeit erreicht wird.

Typischerweise ist der Kugelsperrbolzen so ausgebildet, dass der am Bedienabschnitt angeordnete Bedienknopf vorgesehen ist, mit dem eine Spannachse (Spannachselement) im Achsabschnitt axial verfahrbar ist, wobei die Spannachse einen ersten axialen Abschnitt und einen zweiten axialen Abschnitt, der gegenüber dem ersten axialen Abschnitt radial zurückgesetzt ist, aufweist, und wobei in der Grundposition der erste axiale Abschnitt die wenigstens eine Sperrkugel radial nach außen drückt und in der Freigabeposition die wenigstens eine Sperrkugel auf den zweiten axialen Abschnitt zurückfallen kann.

### Bevorzugte Ausführungsformen

Bevorzugt ist eine Ausführungsform der erfindungsgemäßen Baugruppe mit Adapterteil, die vorsieht, dass das Adapterbauteil weiterhin aufweist eine Gegenfläche zur Anlage an die Anlagefläche, und dass der axiale Abstand von Gegenfläche und Sicherungskante dem axialen Abstand von Anlagefläche und Sperrkugel entspricht. Dadurch wird erreicht, dass bei in das Adapterbauteil eingeschobenem und arretiertem Kugelsperrbolzen der Kugelsperrbolzen mit seiner Anlagefläche anliegend an der Gegenfläche gehalten werden kann. Der Kugelsperrbolzen kann in axialer Richtung nicht (oder jedenfalls nicht merklich) verrutschen.

Bei einer anderen Ausführungsform weist das Adapterbauteil ein Außengewinde zum Einschrauben des Adapterbauteils in eine der Strukturen auf. Eine Befestigung des Adapterbauteils durch Einschrauben in eine Struktur ist besonders einfach.

Vorteilhaft ist eine Weiterbildung dieser Ausführungsform, bei der ein maximaler Radius der Anlagefläche des Bedienabschnitts größer ist als ein maximaler Radius des Außengewindes des Adapterbauteils. Dadurch ist es möglich, den Kugelsperrbolzen mit dem Bedienabschnitt bzw. der zugehörigen Anlagefläche an der Struktur, in welche das Adapterbauteil eingeschraubt ist, abzustützen. Durch eine Einstellung der Einschraubtiefe des Adapterbauteils in die Struktur kann dann ein axiales Spiel des Kugelsperrbolzens eingestellt und insbesondere exakt beseitigt werden.

Vorteilhaft ist weiterhin eine Ausführungsform, bei der das Adapterbauteil Durchbrüche zum Anschrauben des Adapterbauteils auf eine der Strukturen aufweist.

Ein Anschrauben des Adapterbauteil auf einer Struktur ist ebenfalls einfach möglich; typischerweise wird die Struktur dann auch mit Gewindebohrungen für die verwendeten Schrauben versehen, welche die Durchbrüche durchragen und das Adapterbauteil hintergreifen, etwa an einer Schulter im jeweiligen Durchbruch. Alternativ wäre es beispielsweise auch möglich, das Adapterbauteil auf einer Struktur aufzuschweißen.

Bevorzugt ist eine Ausführungsform einer erfindungsgemäßen Baugruppe, bei der die wenigstens eine Sperrkugel samt zugehöriger Ausnehmung in einem oberen Viertel des Achsabschnitts ausgebildet ist, das dem Bedienabschnitt zugewandt ist. Durch Anordnung der wenigstens einen Sperrkugel im oberen (Bedienteilnächsten) Viertel kann die erforderliche Länge einer Bohrung für eine Spannachse weiter reduziert werden.

Bevorzugt ist auch eine Ausführungsform, die vorsieht, dass der Kugelsperrbolzen ein Kopfbauteil aufweist, umfassend
- den Bedienabschnitt,
- einen kopfseitigen Achsteil des Achsabschnitts, und
- die Arretiermechanik, wobei die wenigstens eine Sperrkugel samt zugehöriger Ausnehmung im kopfseitigen Achsteil ausgebildet ist,
und dass der Kugelsperrbolzen weiterhin ein Achsverlängerungsbauteil aufweist, das einen verlängerungsseitigen Achsteil des Achsabschnitts ausbildet. Das Kopfbauteil kann als ein universelles Grundbauteil genutzt werden, an das je nach Anforderung der Anwendung ein Achsverlängerungsbauteil einer ausgewählten Länge angefügt wird. Dadurch können Kugelsperrbolzen mit unterschiedlicher Länge des Achsabschnitts kostengünstig gefertigt werden. Das Achsverlängerungsbauteil und das Kopfbauteil werden typischerweise zunächst separat gefertigt und bei der Herstellung des Kugelsperrbolzens dauerhaft miteinander verbunden, etwa im Presssitz zusammengefügt und/oder verklebt. Alternativ ist es auch möglich, den Achsabschnitt einteilig auszubilden.

Bei einer bevorzugten Weiterbildung dieser Ausführungsform bildet der verlängerungsseitige Achsteil wenigstens 75% der axialen Länge des Achsabschnitts aus. Dadurch sind besonders große gesamte Dicken von zu sichernden Strukturen zugänglich, wobei nur eine kurze Bohrung für die Spannachse einer Arretiermechanik benötigt wird.

Bei einer anderen, bevorzugten Weiterbildung weist das kopfseitige Achsteil eine axiale Bohrung auf, die bis zu einem unteren Ende des kopfseitigen Achsteils reicht. Mit anderen Worten, die axiale Bohrung bildet am unteren Ende des kopfseitigen Axteils eine Öffnung aus. Diese Öffnung kann für die Einrichtung von Luftströmen beim Zusammenbau des Kugelsperrbolzens genutzt werden, insbesondere um die wenigstens eine Sperrkugel gegen den Rand ihrer Ausnehmung nach außen zu drücken oder um die Sperrkugel anzusaugen. Zudem kann die Öffnung bzw. der dahinter liegende Teil der Bohrung dafür genutzt werden, einen Fortsatz des Achsverlängerungsbauteils aufzunehmen, um Kopfbauteil und Achsverlängerungsbauteil miteinander zu verbinden. Zudem beherbergt die Bohrung (in einem oberen Teil) eine Spannachse der Arretiermechanik.

Bevorzugt ist weiterhin eine Weiterbildung, bei der das verlängerungsseitige Achsteil aus Vollmaterial ausgebildet ist. Dies ist besonders kostengünstig herzustellen, und bietet eine besonders hohe Scherfestigkeit, insbesondere im Vergleich zu einem hohlen Rohr.

Vorteilhaft ist ein Montagesystem zur Montage von oben beschriebenen Kugelsperrbolzen mit Kopfbauteil und Achsverlängerungsbauteil, umfassend wenigstens ein Kopfbauteil und eine Vielzahl von Achsverlängerungsbauteilen unterschiedlicher axialer Länge. Mit dem Montagesystem ist eine kostengünstige Bereitstellung bzw. Fertigung von Kugelsperrbolzen mit unterschiedlicher Länge des Achsabschnitts besonders kostengünstig möglich. Für Kugelsperrbolzen unterschiedlicher Länge kann jeweils der gleiche Typ von Kopfbauteil genutzt werden ("universelles Grundbauteil"), der an unterschiedliche Typen von Achsverlängerungsbauteilen mit unterschiedlicher axialer Länge angebaut werden kann. In der Praxis wird jeder Typ von Kopfbauteil und jeder Typ von Achsverlängerungsbauteil an einer Produktionsstätte typischerweise vielfach vorgehalten, z.B. mit einem Vorrat von jeweils wenigstens 100 Bauteilen je Typ. Die gegenseitige Befestigung der Bauteile erfolgt bevorzugt durch Presssitz und/oder Kleben.

Falls gewünscht kann ein Verfahren zur Herstellung eines oben beschriebenen Kugelsperrbolzens mit Kopfbauteil und Achsverlängerungsbauteil eingesetzt werden, wobei das Achsverlängerungsbauteil oder das Kopfbauteil einen Fortsatz zum Einführen in eine Aufnahme des anderen Bauteils aufweist, insbesondere wobei der Fortsatz gegenüber dem sich anschließenden übrigen Bauteil radial enger ausgebildet ist, und wobei am Fortsatz wenigstens ein radialer Rücksprung, insbesondere eine umlaufende Nut, ausgebildet ist, der nahe dem anderen Bauteil zugewandten Ende des Fortsatzes ausgebildet ist,
mit folgenden Schritten:
a) ein fließfähiger Klebstoff wird in den wenigstens einen Rücksprung aufgetragen, wobei zumindest auf eine dem anderen Bauteil abgewandte axiale Hälfte des Fortsatzes kein Klebstoff aufgetragen wird,
b) der Fortsatz wird in die Aufnahme eingeführt, wobei zumindest ein Teil des in den Rücksprung aufgetragenen Klebstoffs auf die dem anderen Bauteil abgewandte Hälfte des Fortsatzes mitgeschleppt wird. Durch dieses Vorgehen ist es möglich, einen Klebstoff-Wulst am Übergang (Stoß) von Kopfbauteil und Achsverlängerungsbauteil (an dem der Durchmesser des Achsabschnitts bevorzugt gleich bleibt) zu verhindern bzw. zu minimieren. Typischerweise wird beim Auftragen des Klebstoffs im Rücksprung nur der Rücksprung zumindest teilweise befüllt, bevorzugt genau aufgefüllt, aber kein Klebstoff über die radiale Höhe des Fortsatzes hinaus aufgetragen. Der Klebstoff wird beim axialen Aufeinanderschieben (oder -pressen) der beiden Bauteile aus dem Rücksprung in der Menge ausgefördert, die für eine Benetzung des Fortsatzes in der dem anderen Bauteil abgewandten Hälfte nötig ist, aber nicht mehr, so dass kein überschüssiger Klebstoff am Stoß aufgeworfen wird. Der Rücksprung dient also als Klebstoffreservoir.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch eine Seitenansicht einer Bauform eines Kugelsperrbolzens für eine erfindungsgemäße Baugruppe, in Grundposition der Arretiermechanik;
- Fig. 2: zeigt schematisch den Kugelsperrbolzen von Fig. 1, in einer teilgeschnittenen Seitenansicht;
- Fig. 3: zeigt schematisch eine Seitenansicht des Kugelsperrbolzens von Fig. 1, in Freigabeposition der Arretiermechanik;
- Fig. 4: zeigt schematisch den Kugelsperrbolzen von Fig. 3, in einer teilgeschnittenen Ansicht;
- Fig. 5: zeigt schematisch eine Bauform eines Montagesystems zur Montage eines Kugelsperrbolzens für die Erfindung, mit einem Kopfbauteil in geschnittener Seitenansicht in Teilbild (d), und drei Achsverlängerungsbauteilen unterschiedlicher axialer Länge in den Teilbildern (a), (b) und (c) in Seitenansicht;
- Fig. 6: zeigt schematisch eine erste Bauform einer Montagegruppe in teilgeschnittener Seitenansicht, mit einem Kugelsperrbolzen und einem Adapterbauteil mit Außengewinde, für die Erfindung;
- Fig. 7: zeigt schematisch eine zweite Bauform einer Montagegruppe in teilgeschnittener Seitenansicht, mit einem Kugelsperrbolzen und einem Adapterbauteil mit Durchbrüchen zum Anschrauben an eine Struktur, für die Erfindung;
- Fig. 8: zeigt schematisch in Perspektivansicht eine erste Ausführungsform einer erfindungsgemäßen Baugruppe mit einem Kugelsperrbolzen, einem eingeschraubten Adapterbauteil, einer ersten Struktur und einer zweiten Struktur;
- Fig. 9: zeigt schematisch in einer teilgeschnittenen Seitenansicht die Baugruppe von Fig. 8, mit in die erste Struktur eingeschraubtem Adapterbauteil, dessen Sicherungskante von den Sperrkugeln hintergriffen wird;
- Fig. 10: zeigt schematisch in einer teilgeschnittenen Seitenansicht eine Baugruppe ähnlich Fig. 9, in einer Variante mit einer Anlagefläche des Bedienabschnitts, die radial über das Außengewinde des Adapterbauteils auskragt;
- Fig. 11: zeigt schematisch in einer teilgeschnittenen Seitenansicht eine Baugruppe ähnlich Fig. 9, in einer Variante ohne Adapterbauteil und mit Ausbildung einer Strukturkante in der ersten Struktur, die von den Sperrkugeln hintergriffen wird;
- Fig. 12: zeigt schematisch in Perspektivansicht eine zweite Ausführungsform einer erfindungsgemäßen Baugruppe mit einem Kugelsperrbolzen, einem außen aufschraubbaren Adapterbauteil, einer ersten Struktur und einer zweiten Struktur;
- Fig. 13: zeigt schematisch eine teilgeschnittene Seitenansicht der Baugruppe von Fig. 12;
- Fig. 14: zeigt schematisch eine Seitenansicht eines Fortsatzes eines Achsverlängerungsbauteils für die Erfindung, mit einer umlaufenden Nut;
- Fig. 15: illustriert in schematischen Schnittansichten ein Verfahren zum Verbindens eines Kopfbauteils und eines Achsverlängerungsbauteils, mit (a) der Fortsatz des Achsverlängerungsbauteils vor dem Auftragen von Klebstoff, mit (b) der Fortsatz nach dem Auftragen des Klebstoffs in die Nut; mit (c) das Aufschieben der Aufnahme des Kopfbauteils auf den Fortsatz des Achsverlängerungsbauteils, und mit (d) Fortsatz und Aufnahme in verbundenem Zustand.

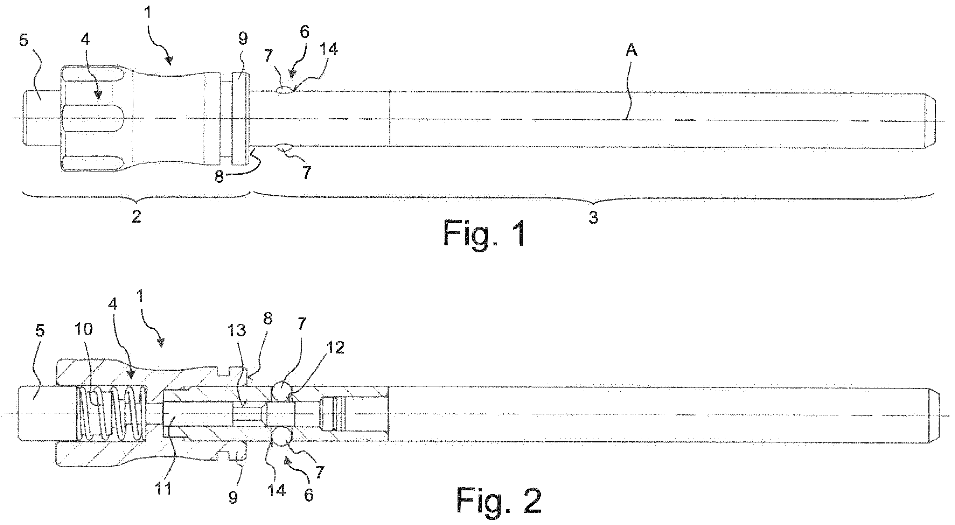

Die **Fig. 1** in einer Seitenansicht und **Fig. 2** in einer im Bereich eines Kopfbauteils geschnittenen Seitenansicht illustrieren eine Bauform eines Kugelsperrbolzens 1 für die Erfindung zur Sicherung von wenigstens zwei Strukturen gegen Scherung.

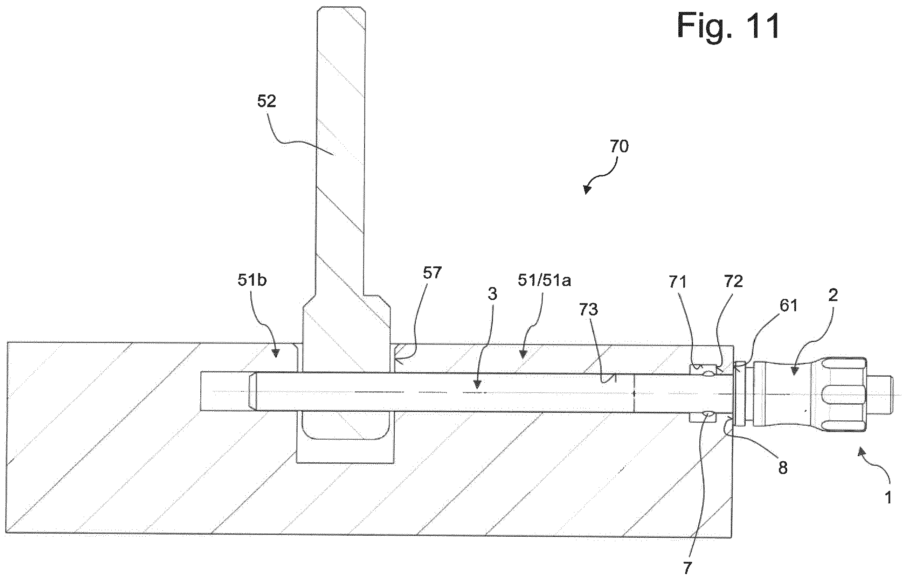

Der Kugelsperrbolzen 1 umfasst einen Bedienabschnitt 2 und einen Achsabschnitt 3, die starr miteinander verbunden sind. Der Bedienabschnitt 2 bildet einen Griff 4 aus, an dem ein Bediener den Kugelsperrbolzen 1 bequem anfassen kann. Weiterhin ist am Bedienabschnitt 2 ein Bedienknopf 5 ausgebildet, mit dem eine Arretiermechanik 6 des Kugelsperrbolzens 1 betätigt werden kann. Der Bedienabschnitt 2 bildet an seinem unteren (dem Achsabschnitt zugewandten) Ende eine Anlagefläche 8 aus, mit der der Bedienabschnitt 2 insbesondere an eine vordere, zu sichernde Struktur oder auch an ein Adapterbauteil angelegt werden kann (nicht näher dargestellt, vgl. aber Fig. 11 und Fig. 6, 7). Die Anlagefläche 8 ist hier mit einem umlaufenden Bund 9 ausgebildet. Der Achsabschnitt 3 ist im Wesentlichen zylinderförmig ausgebildet, vgl. die zugehörige Achse A. Die Anlagefläche 8 ist hier senkrecht zur Achse A orientiert.

Die Arretiermechanik 6 umfasst hier zwei Sperrkugeln 7, die über den Bedienknopf 5 betätigt werden können. Der Bedienknopf 5 wird mit einer Feder 10 in die 2 gezeigte Grundposition vorgespannt, in der der Bedienknopf 5 maximal ausgefahren ist (in Fig. 2 nach links). Der Bedienknopf 5 ist mit einer Spannachse 11 starr verbunden, die einen ersten axialen Abschnitt 12 und einen zweiten axialen Abschnitt 13 ausbildet. Der in radialer Richtung breitere erste axiale Abschnitt 12 drückt in der in Fig. 1 und Fig. 2 gezeigten Grundposition die Sperrkugeln 7 maximal radial nach außen; der erste axiale Abschnitt 12 befindet sich in der Grundposition bezüglich der axialen Richtung also auf Höhe der Sperrkugeln 7. Für jede Sperrkugel 7 ist im Achsabschnitt 3 ein Lager (Hohlraum) ausgebildet, das beispielsweise durch Fräsen in den Achsabschnitt 3 eingebracht wurde. Radial außen am Lager ist jeweils eine Ausnehmung (Öffnung) 14 ausgebildet, die etwas enger ist als der Durchmesser der Sperrkugeln 7. Wenn der erste axiale Abschnitt die Sperrkugeln 7 maximal nach außen drückt, ragen die Sperrkugeln 7 durch die Ausnehmungen 14 radial nach außen über den Achsabschnitt 3 hinaus; dabei liegen in der Regel die Sperrkugeln 7 an einem Rand der Ausnehmung 14 press an.

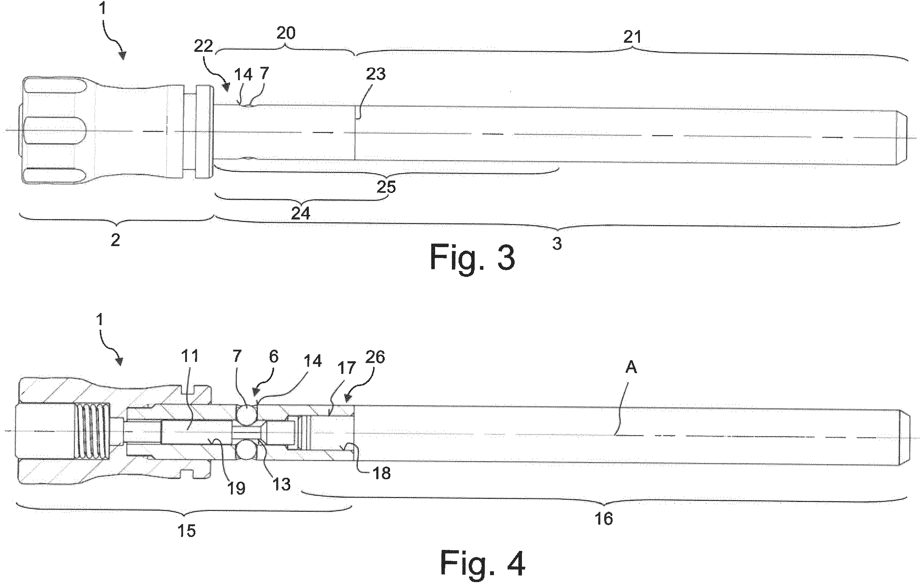

In einer Freigabeposition der Arretiermechanik 6, die in **Fig. 3** wiederum in Seitenansicht und in **Fig. 4** in teilgeschnittener Ansicht gezeigt ist, befindet sich der radial engere zweite axiale Abschnitt 13 bezüglich der axialen Richtung auf Höhe der Sperrkugeln 7. Dafür wurde der Bedienknopf 5 in axialer Richtung durch einen Bediener eingedrückt (in Fig. 4 nach rechts), und die Spannachse 11 entsprechend verschoben.

In der Freigabeposition können die Sperrkugeln 7 in den durch den radial engeren, zweiten axialen Abschnitt 13 freigegebenen Raum zurückfallen. Die Kugeln 7 liegen nicht mehr am Rand der Ausnehmung 14 an, sondern fallen gegenüber der Ausnehmung 14 radial zurück (bzw. können ohne mechanischen Widerstand radial zurückfallen, wenn eine radial nach innen gerichtete Kraft auf die Sperrkugeln 7 ausgeübt wird). Die Sperrkugeln 7 stehen in der Freigabeposition nicht mehr gegenüber dem Achsabschnitt 3 radial hervor, sondern bleiben radial hinter dem Achsabschnitt 3 zurück (oder auf gleicher Höhe in radialer Richtung). In der Freigabeposition kann der Kugelsperrbolzen 1 durch Bohrungen oder Öffnungen von Strukturen geführt werden, die bei hervorstehenden Sperrkugeln 7 zu eng für ein Passieren wären, etwa für eine Installation oder Deinstallation des Kugelsperrbolzens 1.

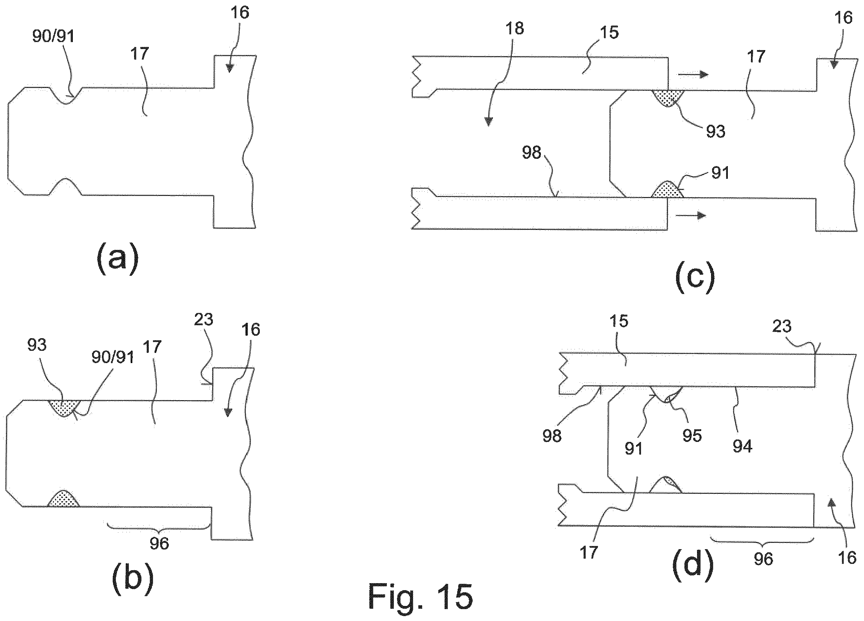

In der gezeigten Bauform ist der Kugelsperrbolzen 1 aus zwei Bauteilen zusammengesetzt, nämlich einem Kopfbauteil 15 und einem Achsverlängerungsbauteil 16. Zur dauerhaften Verbindung der Bauteile 15, 16 wurde ein Fortsatz 17 des Achsverlängerungsbauteils 16 in eine Aufnahme 18 des Kopfbauteils 15 eingeschoben (eingepresst) und verklebt (siehe hierzu Fig. 15); man beachte, dass in anderen Ausführungsformen auch andere Verbindungsmethoden eingesetzt werden können, etwa ein einfacher Presssitz ohne Verkleben. Am Stoß 23 der Bauteile 15, 16 bleibt der Durchmesser des Achsabschnitts 3 gleich.

Das Kopfbauteil 15 enthält die vollständige Arretiermechanik 6. Insbesondere ist die Spannachse 11 in einer axialen Bohrung 19 des Kopfbauteils 15 geführt; die Bohrung 19 reicht hier bis zum unteren, in Fig. 4 rechtsseiteigen Ende (zugewandt dem Achsverlängerungsbauteil 16) und dient zusätzlich auch mit ihrem unteren (in Fig. 4 rechten) Teil als Aufnahme 18 für den Fortsatz 17. Das Achsverlängerungsbauteil 16 ist hier aus Vollmaterial ausgebildet. Der Achsabschnitt 3 wird teilweise vom Kopfbauteil 15 ausgebildet, nämlich im Bereich des kopfseitigen Achsteils 20, und teilweise vom Achsverlängerungsbauteil 16 ausgebildet, nämlich im verlängerungsseitigen Achsteil 21. Der verlängerungsseitige Achsteil 21 bildet hier ca. 80% der axialen Länge des Achsabschnitts 3 aus.

Die Sperrkugeln 7 und die zugehörigen Ausnehmungen 14 sind erfindungsgemäß nahe beim oberen (bedienabschnittseitigen) Ende 22 des Achsabschnitts 3 ausgebildet, so dass lediglich eine vergleichsweise kurze Bohrung 19 für die Spannachse 11 gefertigt werden muss, hier im Kopfbauteil 15, um die Sperrkugeln 7 mit der Spannachse 11 zu erreichen. Gemäß der Erfindung ist vorgesehen, dass die Sperrkugeln 7 und die zugehörigen Ausnehmungen 14 in einer oberen (also dem Bedienabschnitt 2 nahen) Hälfte 25 des Achsabschnitts 3, bevorzugt in einem oberen (dem Bedienabschnitt 2 nächsten) Drittel des Achsabschnitts 3, und besonders bevorzugt in einem oberen (dem Bedienabschnitt 2 nächsten) Viertel 24 des Achsabschnitts 3 angeordnet ist. In der gezeigten Ausführungsform liegen etwa 5% der Länge des Achsabschnitts 3 oberhalb (in Fig. 3 links) der Sperrkugeln 7, und etwa 95% der Länge des Achsabschnitts unterhalb (in Fig. 3 rechts) der Sperrkugeln 7.

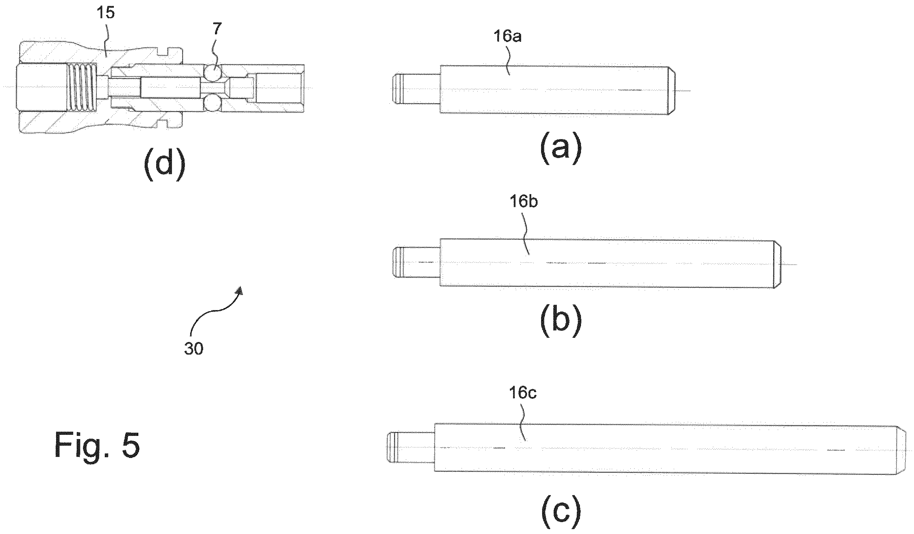

Die **Fig.** 5 illustriert eine Bauform eines Montagesystems 30 für die Montage eines Kugelsperrbolzens für die Erfindung. Das Montagesystem 30 umfasst ein Kopfbauteil 15, siehe Teilbild (d), und hier drei Achsverlängerungsbauteile 16a-16c, siehe Teilbilder (a), (b) und (c), die jeweils eine unterschiedliche axiale Länge aufweisen. Das Achsverlängerungsbauteil 16a ist das kürzeste, das Achsverlängerungsbauteil 16b weist eine mittlere axiale Länge auf, und das Achsverlängerungsbauteil 16c ist das längste des Montagesystems 30. Je nach Anwendungsfall kann der gleiche Typ von Kopfbauteil 15 mit verschiedenen Typen von Achsverlängerungsbauteilen 16a-16c zur Herstellung eines Kugelsperrbolzens kombiniert werden. Für alle Typen von Achsverlängerungsbauteilen 16a-16c liegen im montierten Zustand des Kugelsperrbolzens die Sperrkugeln 7 hier in einem oberen Viertel des Achsabschnitts (nicht näher dargestellt).

Das Kopfbauteil 15 ist hier in Freigabeposition dargestellt.

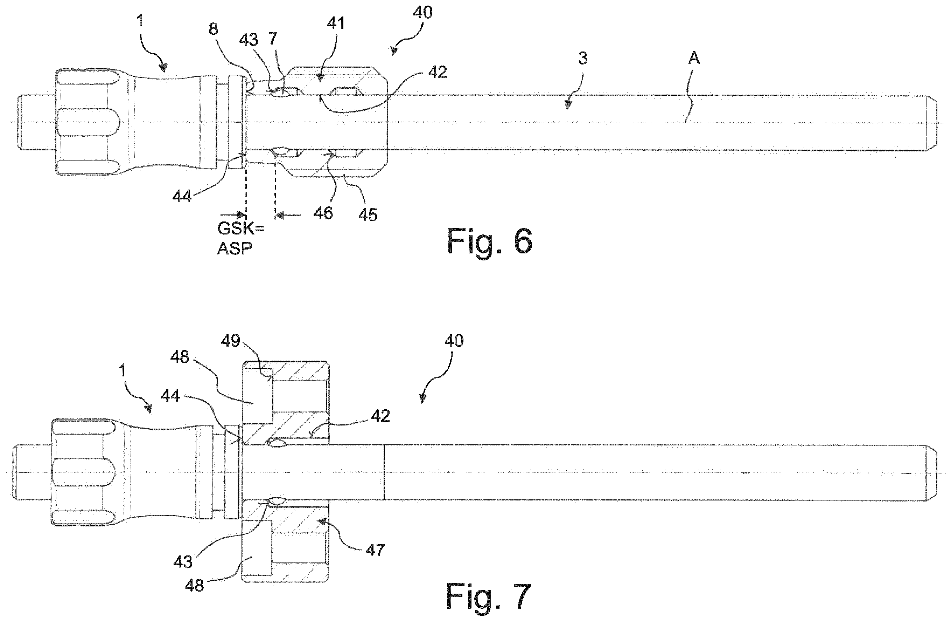

Die **Fig.** 6 zeigt eine erste Bauform einer erfindungsgemäßen Montagegruppe 40, umfassend einen erfindungsgemäßen Kugelsperrbolzen 1 (dargestellt in Grundposition) und ein Adapterbauteil 41, für die Erfindung.

Das Adapterbauteil 41 verfügt über eine radial zentral gelegene, axial durchgehende Adapterausnehmung 42 zum Durchführen des Achsabschnitts 3 des Kugelsperrbolzens 1. Im gezeigten Zustand ist der Achsabschnitt 3 durch die Adapterausnehmung 42 hindurch geschoben und der Kugelsperrbolzen 1 am Adapterbauteil 1 arretiert; die Adapterausnehmung 42 bildet eine Sicherungskante 43 aus, die von den Sperrkugeln 7 des Kugelsperrbolzens 1 hintergriffen werden.

Das Adapterbauteil 40 bildet weiterhin eine Gegenfläche 44 aus, die hier senkrecht zur Richtung der Achse A ausgerichtet ist, und für eine Anlage an der Anlagefläche 8 des Kugelsperrbolzens 1 eingerichtet ist. Im gezeigten Zustand liegt die Anlagefläche 8 an der Gegenfläche 44 an.

In der gezeigten Ausführungsform sind der axiale Abstand GSK von Gegenfläche 44 und Sicherungskante 43 (bezogen auf den Berührpunkt mit den Sperrkugeln 7) und der axiale Abstand ASP von Anlagefläche 8 und Sperrkugeln 7 (bezogen auf den Berührpunkt mit der Sicherungskante 43) gleich, wodurch (innerhalb der Fertigungsgenauigkeit) ein spielfreier Sitz des Kugelsperrbolzens 1 am Adapterbauteil 41 erreicht werden kann.

Das Adapterbauteil 41 ist mit einem Außengewinde 45 versehen, mit dem es in eine zu sichernde Struktur eingeschraubt und an dieser Struktur befestigt werden kann.

Durch Befestigung des Adapterbauteils 41 an einer zu sichernden Struktur ist es nicht mehr nötig, an der zu sichernden Struktur eine Strukturkante für einen Hintergriff der Sperrkugeln 7 einzurichten, was in der Regel schwierig zu fertigen wäre. Stattdessen genügt die Einrichtung eines zum Außengewinde 45 passenden Innengewindes in der Struktur, was in der Regel leicht zu fertigen ist.

In der gezeigten Bauform wird von der Adapterausnehmung 42 eine weitere Sicherungskante 46 ausgebildet, die für eine Zusammenwirkung mit einem Kugelsperrbolzen eines anderen Typs (insbesondere eines anderen axialen Abstands ASP) vorgesehen ist (letzteres nicht näher dargestellt).

Die **Fig. 7** illustriert eine zweite Bauform einer Montagegruppe 40, mit einem Kugelsperrbolzen 1 (dargestellt in Grundposition) und einem Adapterbauteil 47 eines anderen Typs, für die Erfindung. Es werden nur die wesentlichen Unterschiede zu Fig. 6 erläutert.

In der gezeigten Bauform verfügt das Adapterbauteil 47 über Durchbrüche 48 für Schrauben (letztere nicht dargestellt), die in eine zu sichernde Struktur eingeschraubt werden und mit ihrem Schraubenkopf über die Schultern 49 der Durchbrüche 48 das Adapterbauteil 47 gegen die zu sichernde Struktur verspannen bzw. an dieser befestigen können.

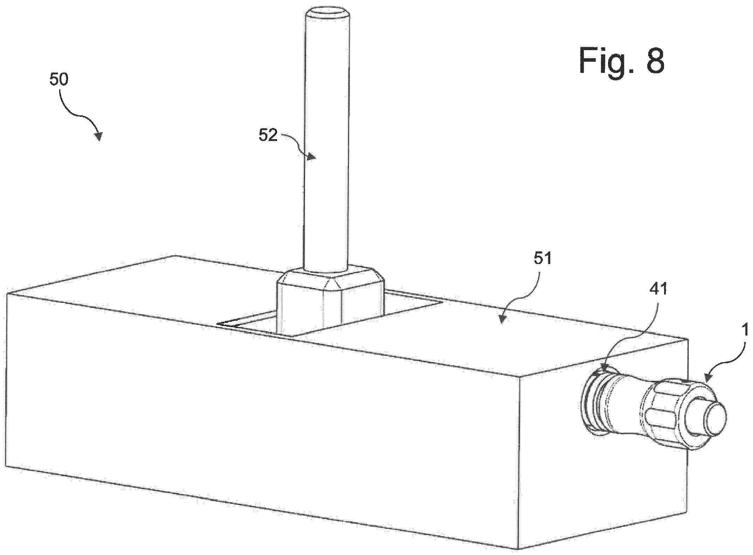

Die **Fig. 8** zeigt in einer Perspektivansicht eine erste Ausführungsform einer erfindungsgemäßen Baugruppe 50, umfassend einen Kugelsperrbolzen 1 und ein Adapterbauteil 41 (also eine Montagegruppe), und weiterhin eine erste Struktur 51 und eine hier hebelförmige zweite Struktur 52, die gegen Scherung relativ zueinander gesichert werden sollen.

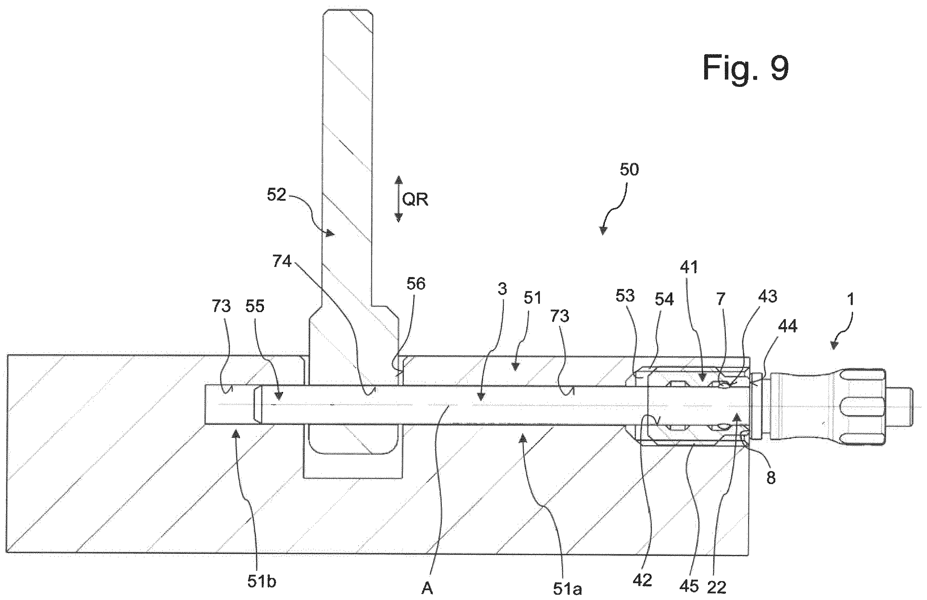

Die **Fig. 9** zeigt die Baugruppe 50 von Fig. 8 in einer teilweise geschnittenen Seitenansicht (der Kugelsperrbolzen 1 ist ungeschnitten dargestellt). Das Adapterbauteil 41 (vgl. hierzu auch Fig. 6) ist in eine Gewindebohrung 53 der ersten Struktur 51 eingeschraubt; das Innengewinde 54 der Gewindebohrung 53 ist passend zum Außengewinde 45 des Adapterbauteils 41 ausgebildet.

Der Achsabschnitt 3 des Kugelsperrbolzens 1 durchragt hier das Adapterbauteil 41 (vgl. die Adapterausnehmung 42), die erste Struktur 51 an ihrem ersten Abschnitt 51a (vgl. die Bohrung 73 im ersten Abschnitt 51a) und die zweite Struktur 52 (vgl. die Bohrung 74 in der zweiten Struktur 52). Die zweite Struktur 52 ist dabei an einer Seite 56 der ersten Struktur 51 (hier des ersten Abschnitts 51a der ersten Struktur 51) angeordnet, die vom Adapterbauteil 41 abgewandt ist. Weiterhin ragt der Achsabschnitt 3 mit seinem unteren Ende 55 nochmals in die erste Struktur 51 in einem zweiten Abschnitt 51b ein (vgl. die Bohrung 73 im zweiten Abschnitt 51b). Die zweite Struktur 52 ist dadurch gegen Scherung relativ zur ersten Struktur 51, also ein Verschieben der zweiten Struktur 52 in Richtung QR quer zur Achse A des Kugelsperrbolzens 1 gegenüber der ersten Struktur 51, gesichert. Eine Verliersicherung des Kugelsperrbolzens 1 wird in der dargestellten Grundposition durch den Hintergriff der Sperrkugeln 7 an der Sicherungskante 43 des Adapterbauteils 41 am oberen (bedienteilnahen) Ende 22 des Achsabschnitts 3 sichergestellt. Die zweite Struktur 52 kann bezüglich der axialen Richtung nicht verloren gehen, da die zweite Struktur 52 zwischen dem ersten Abschnitt 51a und dem zweiten Abschnitt 51b der ersten Struktur 51 axial festgelegt (umgriffen) ist.

In der gezeigten Ausführungsform von Fig. 9 liegt die Anlegefläche 8 des Kugelsperrbolzens 1 lediglich an der Gegenfläche 44 des Adapterbauteils 41, nicht aber an der ersten Struktur 51 an.

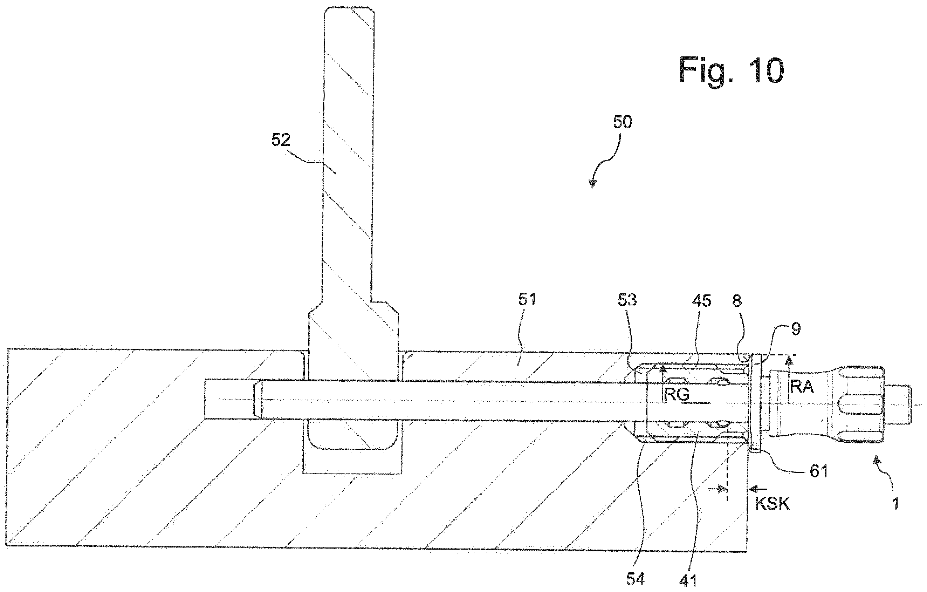

In einer Variante der Baugruppe 50, die in **Fig. 10** dargestellt ist, wobei nur die wesentlichen Unterschiede zu Fig. 9 erläutert werden, ragt der Bund 9, der die Anlagefläche 8 des Kugelsperrbolzens 1 ausbildet, radial über die Gewinde 54, 45 hinaus, so dass die Anlagefläche 8 an einer Konterfläche 61 der ersten Struktur 51 anliegt. Der maximale Radius RA der Anlagefläche 8 ist entsprechend größer als der maximale Radius RG des Außengewindes 45. Dadurch ist es möglich, über die axiale Einschraubtiefe des Adapterbauteils 41 in die Gewindebohrung 53 einen axialen Abstand KSK zwischen Konterfläche 61 und Sicherungskante 43 (bezogen auf den Berührpunkt mit den Sperrkugeln 7) einzustellen. Dadurch kann ein axiales Spiel des Kugelsperrbolzens 1 in der Grundposition in Hinblick auf den axialen Abstand ASP zwischen Anlagefläche 8 und den Sperrkugeln 7 (bezogen auf den Berührpunkt an der Sicherungskante 43) eingestellt bzw. beseitigt werden, etwa um Fertigungstoleranzen auszugleichen.

In einer weiteren Variante ist in **Fig. 11** eine Baugruppe 70 dargestellt, die ähnlich zur Baugruppe von Fig. 8 und Fig. 9 ausgebildet ist; es werden nur die wesentlichen Unterschiede erläutert.

Bei dieser Baugruppe 70 wird kein Adapterbauteil eingesetzt. Stattdessen ist in der ersten Struktur 51 eine Nut 71 gefräst, die eine Strukturkante 72 ausbildet, die von den Sperrkugeln 7 des Kugelsperrbolzens 1 in der dargestellten Grundposition hintergriffen wird. Die Nut 71 ist hier so positioniert, dass der Kugelsperrbolzen 1 mit der Anlagefläche 8 anliegend an der ersten Struktur 51 im Bereich der Konterfläche 61 ohne axiales Spiel an der ersten Struktur 51 verliersicher gehalten ist. Für diese Bauform muss über die Bohrung 73 der ersten Struktur 51, die den Achsabschnitt 3 des Kugelsperrbolzens 1 führt, die innenliegende Nut 71 gefertigt werden, was beispielsweise mit einem Fingerfräser erfolgen kann.

Der Kugelsperrbolzen 1 durchragt mit seinem Achsabschnitt 3 die erste Struktur 51 in ihrem ersten Abschnitt 51a und die zweite Struktur 52, und ragt nochmals in die erste Struktur 51 im Bereich ihres zweiten Abschnitts 51b hinein. Die zweite Struktur 52 ist an einer Seite 57 der ersten Struktur 51 (hier des ersten Abschnitts 51a der ersten Struktur 51) angeordnet, die dem Bedienabschnitt 2 abgewandt ist.

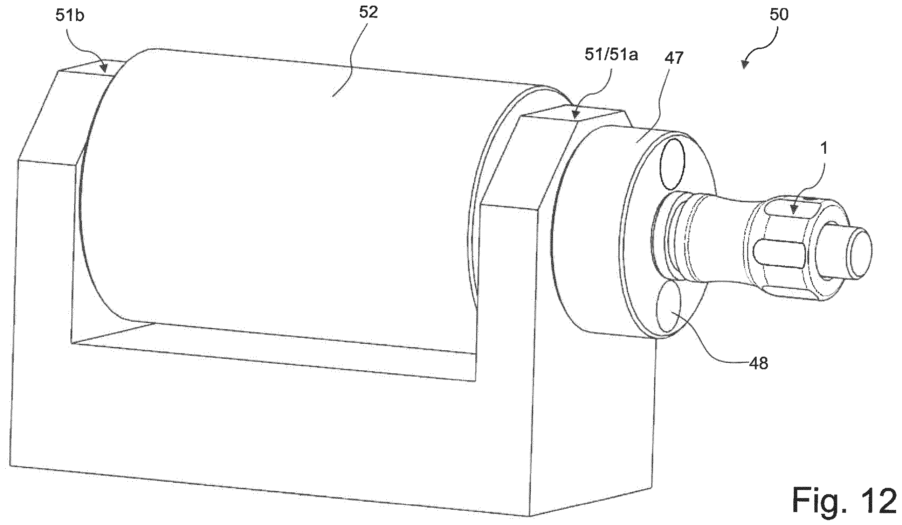

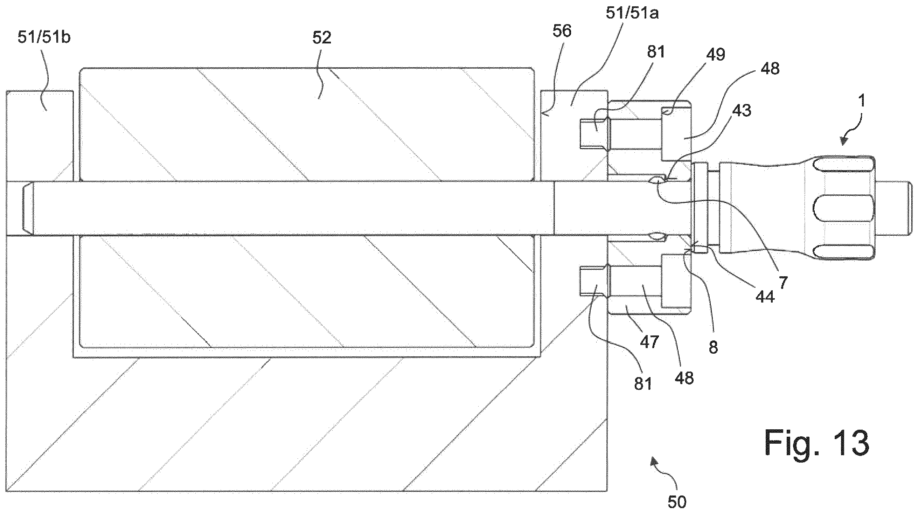

Eine zweite Ausführungsform einer Baugruppe 50 illustrieren die **Fig. 12** in einer Perspektivansicht und **Fig. 13** in einer teilweise geschnittenen Seitenansicht (der Kugelsperrbolzen 1 ist ungeschnitten dargestellt). Es werden vor allem die Unterschiede zur Bauform von Fig. 8 und Fig. 9 erläutert.

Die in der in Fig. 12 und Fig. 13 gezeigte Baugruppe 50 umfasst einen Kugelsperrbolzen 1 und ein Adapterbauteil 47 (vgl. hierzu Fig. 7), also eine Montagegruppe. Das Adapterbauteil 47 ist mit Durchbrüchen 48 für Schrauben (nicht dargestellt) ausgebildet. Weiterhin umfasst die Baugruppe 50 eine erste Struktur 51 und eine hier walzenförmige zweite Struktur 52, die durch den Kugelsperrbolzen 1 relativ zueinander gegen Scherung gesichert werden.

In der ersten Struktur 51 sind fluchtend zu den Durchbrüchen 48 des Adapterbauteils 47 Gewindebohrungen 81 ausgebildet. Dadurch ist es möglich, das Adapterbauteil 47 auf die erste Struktur 51 aufzuschrauben. Die Schrauben (nicht dargestellt) werden in und durch die Durchbrüche 48 geschoben und in den Gewindebohrungen 81 verschraubt; dabei liegen hier die Schraubenköpfe an den Schultern 49 der Durchbrüche 48 an.

Das Adapterbauteil 47 wird in der Grundposition an der Sicherungskante 43 von Sperrkugeln 7 des Kugelsperrbolzens 1 hintergriffen, so dass der Kugelsperrbolzen 1 unverlierbar gehalten ist.

Der Kugelsperrbolzen 1 durchragt wiederum das Adapterbauteil 47 (an dessen Gegenfläche 44 die Anlagefläche 8 anliegt), weiter einen ersten Abschnitt 51a der ersten Struktur 51 und die zweite Struktur 52, und ragt weiterhin in einen zweiten Abschnitt 51b der ersten Struktur 51 hinein.

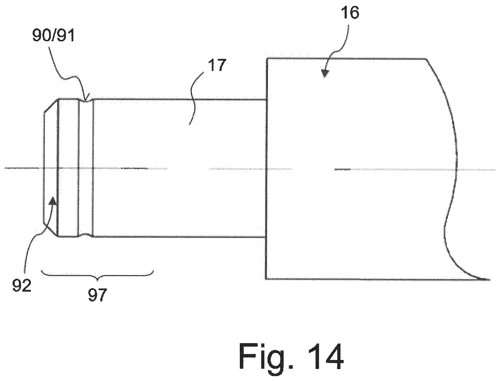

Die **Fig. 14** zeigt in Seitenansich das bedienabschnittnahe Ende eines Achsverlängerungsbauteils 16 für einen Kugelsperrbolzen, im Bereich des Fortsatzes 17, für die Erfindung. Der Fortsatz 17 ist mit einem radialen Rücksprung 90, hier ausgebildet als eine umlaufende Nut 91, versehen. Der Rücksprung ist nahe dem axialen Ende 92 des Fortsatzes 17 ausgebildet, dass im montierten Zustand dem Kopfbauteil zugewandt sein wird ("Begegnungsende"). Insbesondere befindet sich der Rücksprung 90 in einer axialen Hälfte 97 des Fortsatzes 17, der dem Kopfbauteil zugewandt ist.

Die **Fig. 15** erläutert ein Verfahren zum Verbinden des Achsverlängerungsbauteils 16 aus Fig. 14 mit einem Kopfbauteil 15.

Die in Teilbild (a) dargestellte zunächst leere Nut 91 wird mit einem Klebstoff 93 gefüllt, wie in Teilbild (b) dargestellt. Der Klebstoff 93 sollte mit mittlerer bis hoher Viskosität (beispielsweise mit einer Viskosität zwischen 5^{∗}10² und 1^{∗}10⁵ mPa*s [Millipascalsekunden] bei Verarbeitungstemperatur, meist Raumtemperatur) fließfähig sein. Typischerweise wird nur die Nut 91 befüllt und sonst kein Klebstoff auf den Fortsatz 17 aufgetragen, insbesondere wird auf eine Hälfte 96 des Fortsatzes 17, die dem Kopfbauteil im montierten Zustand abgewandt sein wird (bzw. dem Stoß 23 zugewandt ist), kein Klebstoff aufgetragen. Ebenso wird typischerweise die Nut 91 näherungsweise vollständig, aber nicht darüber hinaus befüllt.

Sodann wird das Kopfbauteil 15 mit seiner Aufnahme 18 auf den Fortsatz 17 aufgeschoben, vgl. Teilbild (c). An der innenseitigen Wand 98 der Aufnahme 18 wird beim Passieren der Nut 91 Klebstoff 93 in geringer Menge mitgeschleppt. Dadurch wird erreicht, dass jenseits der Nut 91, und insbesondere im Bereich der Hälfte 96 des Fortsatzes 17, die dem Kopfbauteil 15 abgewandt ist, an der Grenzfläche 94 von Fortsatz 17 und Wand 98 eine dünne Schicht Klebstoff eingebracht wird. Der Klebstoffvorrat in der Nut 91 wird dadurch zumindest teilweise verbraucht; in der gezeigten Variante verbleibt ein kleiner Rest 95 an Klebstoff in der Nut 91, vgl. Teilbild (d). Am Stoß 23 wird kein oder nur eine minimale Menge von Klebstoff als Wulst aufgeworfen, so dass in der Regel keine Nachbehandlung notwendig ist.

Nach dem Aushärten des Klebstoffs an der Grenzfläche 94 sind das Kopfbauteil 15 und das Achsverlängerungsbauteil 16 dauerhaft miteinander verbunden.

### Bezugszeichenliste

- 1: Kugelsperrbolzen
- 2: Bedienabschnitt
- 3: Achsabschnitt
- 4: Griff
- 5: Bedienknopf
- 6: Arretiermechanik
- 7: Sperrkugeln
- 8: Anlagefläche
- 9: Bund
- 10: Feder
- 11: Spannachse
- 12: erster axialer Abschnitt
- 13: zweiter axialer Abschnitt
- 14: Ausnehmung für Sperrkugeln
- 15: Kopfbauteil
- 16: Achsverlängerungsbauteil
- 16a-c: Achsverlängerungsbauteile
- 17: Fortsatz
- 18: Aufnahme
- 19: Bohrung
- 20: kopfseitiger Achsteil
- 21: verlängerungsseitiger Achsteil
- 22: bedienabschnittseitiges Ende (Achsabschnitt)
- 23: Stoß
- 24: bedienteilnahes/oberes Viertel (Achsabschnitt)
- 25: bedienteilnahe/obere Hälfte (Achsabschnitt)
- 26: unteres Ende
- 30: Montagesystem
- 40: Montagegruppe
- 41: Adapterbauteil
- 42: Adapterausnehmung
- 43: Sicherungskante
- 44: Gegenfläche
- 45: Außengewinde
- 46: weitere Sicherungskante
- 47: Adapterbauteil
- 48: Durchbruch
- 49: Schulter
- 50: Baugruppe
- 51: erste Struktur
- 51a: erster Abschnitt der ersten Struktur
- 51b: zweiter Abschnitt der ersten Struktur
- 52: zweite Struktur
- 53: Gewindebohrung
- 54: Innengewinde
- 55: unteres Ende (Achsabschnitt)
- 56: dem Adapterbauteil abgewandte Seite (erste Struktur)
- 57: dem Bedienabschnitt abgewandte Seite (erste Struktur)
- 61: Konterfläche
- 70: Baugruppe
- 71: Nut
- 72: Strukturkante
- 73: Bohrung (erste Struktur)
- 74: Bohrung (zweite Struktur)
- 81: Gewindebohrung
- 90: Rücksprung
- 91: Nut (Fortsatz)
- 92: dem Kopfbauteil zugewandtes Ende (Fortsatz)
- 93: Klebstoff
- 94: Grenzfläche
- 95: Rest (Klebstoff)
- 96: dem Kopfbauteil abgewandte Hälfte (Fortsatz)
- 97: dem Kopfbauteil zugewandte Hälfte (Fortsatz)
- 98: Wand
- A: Achse
- ASP: axialer Abstand Anlagefläche-Sperrkugel
- GSK: axialer Abstand Gegenfläche-Sicherungskante
- KSK: axialer Abstand Konterfläche-Sperrkugel
- QR: Richtung quer zur Achse

## Patentansprüche

1. Baugruppe (70), umfassend einen Kugelsperrbolzen (1) und wenigstens zwei gegen Scherung zu sichernde Strukturen (51, 52),
mit dem Kugelsperrbolzen (1) umfassend
- einen Bedienabschnitt (2), wobei der Bedienabschnitt (2) einen Griff (4) ausbildet, an dem ein Bediener den Kugelsperrbolzen (1) anfassen kann,
- einen Achsabschnitt (3) für einen Eingriff in die wenigstens zwei Strukturen (51, 52) und
- eine Arretiermechanik (6),
wobei der Bedienabschnitt (2) und der Achsabschnitt (3) starr miteinander verbunden sind und der Bedienabschnitt (2) an seinem dem Achsabschnitt (3) zugewandten Ende eine Anlagefläche (8), insbesondere einen Bund (9), zur Anlage an eine der Strukturen (51, 52) aufweist,
wobei am Bedienabschnitt (2) ein Bedienknopf (5) ausgebildet ist, mit dem die Arretiermechanik (6) betätig werden kann und der in einer axialen Richtung vom Bediener eingedrückt werden kann,
wobei mit der Arretiermechanik (6) wenigstens eine Sperrkugel (7) betätigt werden kann,
und wobei in einer Grundposition der Arretiermechanik (6) die wenigstens eine Sperrkugel (7) durch eine Ausnehmung (14) im Achsabschnitt (3) aus dem Achsabschnitt (3) radial herausragt, und in einer Freigabeposition die wenigstens eine Sperrkugel (7) radial hinter die Ausnehmung (14) zurückfallen kann,
**dadurch gekennzeichnet,**
**dass** die wenigstens eine Sperrkugel (7) samt zugehöriger Ausnehmung (14) in einer oberen Hälfte (25) des Achsabschnitts (3) ausgebildet ist, die dem Bedienabschnitt (2) zugewandt ist,
und **dass** der Achsabschnitt (3) eine erste Struktur (51) durchragt,
wobei die wenigstens eine Sperrkugel (7) in der Grundposition eine Strukturkante (72) der ersten Struktur (51) hintergreift,
und wobei der Achsabschnitt (3) weiterhin eine zweite Struktur (52), die an einer dem Bedienabschnitt (2) abgewandten Seite (57) der ersten Struktur (51) angeordnet ist, durchragt oder in die zweite Struktur (52) hineinragt, und die zweite Struktur (52) von der wenigstens einen Sperrkugel (7) nicht hintergriffen wird,
insbesondere wobei die Anlagefläche (8) an der ersten Struktur (51) anliegt.

2. Baugruppe (50), umfassend einen Kugelsperrbolzen (1) und wenigstens zwei gegen Scherung zu sichernde Strukturen (51, 52),
mit dem Kugelsperrbolzen (1) umfassend
- einen Bedienabschnitt (2), wobei der Bedienabschnitt (2) einen Griff (4) ausbildet, an dem ein Bediener den Kugelsperrbolzen (1) anfassen kann,
- einen Achsabschnitt (3) für einen Eingriff in die wenigstens zwei Strukturen (51, 52) und
- eine Arretiermechanik (6),
wobei der Bedienabschnitt (2) und der Achsabschnitt (3) starr miteinander verbunden sind und der Bedienabschnitt (2) an seinem dem Achsabschnitt (3) zugewandten Ende eine Anlagefläche (8), insbesondere einen Bund (9), zur Anlage an eine der Strukturen (51, 52) aufweist,
wobei am Bedienabschnitt (2) ein Bedienknopf (5) ausgebildet ist, mit dem die Arretiermechanik (6) betätig werden kann und der in einer axialen Richtung vom Bediener eingedrückt werden kann,
wobei mit der Arretiermechanik (6) wenigstens eine Sperrkugel (7) betätigt werden kann,
und wobei in einer Grundposition der Arretiermechanik (6) die wenigstens eine Sperrkugel (7) durch eine Ausnehmung (14) im Achsabschnitt (3) aus dem Achsabschnitt (3) radial herausragt, und in einer Freigabeposition die wenigstens eine Sperrkugel (7) radial hinter die Ausnehmung (14) zurückfallen kann,
**dadurch gekennzeichnet,**
**dass** die wenigstens eine Sperrkugel (7) samt zugehöriger Ausnehmung (14) in einer oberen Hälfte (25) des Achsabschnitts (3) ausgebildet ist, die dem Bedienabschnitt (2) zugewandt ist,
**dass** die Baugruppe weiterhin umfasst ein Adapterbauteil (41; 47), wobei das Adapterbauteil (41; 47) aufweist
- eine Adapterausnehmung (42) zum Durchführen des Achsabschnitts (3), und
- eine Sicherungskante (43) in der Adapterausnehmung (42) zum Hintergreifen des Adapterbauteils (41; 47) mit der wenigstens einen Sperrkugel (7) in der Grundposition der Arretiermechanik (6),
**dass** das Adapterbauteil (41; 47) an einer ersten Struktur (51) starr befestigt ist, insbesondere angeschraubt oder angeschweißt ist,
wobei die wenigstens eine Sperrkugel (7) in der Grundposition die Sicherungskante (43) der Adapterausnehmung (42) des Adapterbauteils (41; 47) hintergreift,
wobei der Achsabschnitt (3) das Adapterbauteil (41; 47) und die erste Struktur (51) durchragt,
und wobei der Achsabschnitt (3) weiterhin eine zweite Struktur (52), die an einer dem Adapterbauteil (41; 47) und dem Bedienabschnitt (2) abgewandten Seite (56) der ersten Struktur (51) angeordnet ist, durchragt oder in die zweite Struktur (52) hineinragt, und die zweite Struktur von der wenigstens einen Sperrkugel (7) nicht hintergriffen wird,
insbesondere wobei die Anlagefläche (8) an einer Gegenfläche (44) des Adapterbauteils (41; 47) anliegt.

3. Baugruppe (50) nach Anspruch 2, **dadurch gekennzeichnet, dass** das Adapterbauteil (41; 47) weiterhin aufweist eine Gegenfläche (44) zur Anlage an die Anlagefläche (8), und dass der axiale Abstand (GSK) von Gegenfläche (44) und Sicherungskante (43) dem axialen Abstand (ASP) von Anlagefläche (8) und Sperrkugel (7) entspricht.

4. Baugruppe (50) nach Anspruch 2 oder 3, **dadurch gekennzeichnet, dass** das Adapterbauteil (41) ein Außengewinde (45) zum Einschrauben des Adapterbauteils (41) in eine der Strukturen (51, 52) aufweist.

5. Baugruppe (50) nach Anspruch 4, **dadurch gekennzeichnet, dass** ein maximaler Radius (RA) der Anlagefläche (8) des Bedienabschnitts (2) größer ist als ein maximaler Radius (RG) des Außengewindes (45) des Adapterbauteils (41).

6. Baugruppe (50) nach Anspruch 2 oder 3, **dadurch gekennzeichnet, dass** das Adapterbauteil (47) Durchbrüche (48) zum Anschrauben des Adapterbauteils (47) auf eine der Strukturen (51, 52) aufweist.

7. Baugruppe (50; 70) nach einem der vorhergehenden Ansprüche, **dadurch gekennzeichnet, dass** die wenigstens eine Sperrkugel (7) samt zugehöriger Ausnehmung (14) in einem oberen Viertel (24) des Achsabschnitts (3) ausgebildet ist, das dem Bedienabschnitt (2) zugewandt ist.

8. Baugruppe (50; 70) nach einem der vorhergehenden Ansprüche, **dadurch gekennzeichnet,**
**dass** der Kugelsperrbolzen (1) ein Kopfbauteil (15) aufweist, umfassend
- den Bedienabschnitt (2),
- einen kopfseitigen Achsteil (20) des Achsabschnitts (3), und
- die Arretiermechanik (6), wobei die wenigstens eine Sperrkugel (7) samt zugehöriger Ausnehmung (14) im kopfseitigen Achsteil (20) ausgebildet ist,
und **dass** der Kugelsperrbolzen (1) weiterhin ein Achsverlängerungsbauteil (16; 16a-16c) aufweist, das einen verlängerungsseitigen Achsteil (21) des Achsabschnitts (3) ausbildet.

9. Baugruppe (50; 70) nach Anspruch 8, **dadurch gekennzeichnet, dass** der verlängerungsseitige Achsteil (21) wenigstens 75% der axialen Länge des Achsabschnitts (3) ausbildet.

10. Baugruppe (50; 70) nach Anspruch 8 oder 9, **dadurch gekennzeichnet, dass** das kopfseitige Achsteil (20) eine axiale Bohrung (19) aufweist, die bis zu einem unteren Ende (26) des kopfseitigen Achsteils (20) reicht.

11. Baugruppe (50; 70) nach einem der Ansprüche 8 bis 10, **dadurch gekennzeichnet, dass** das verlängerungsseitige Achsteil (21) aus Vollmaterial ausgebildet ist.

12. Baugruppe (50; 70) nach einem der Ansprüche 8 bis 11, **dadurch gekennzeichnet, dass** das Achsverlängerungsbauteil (16; 16a-16c) und das Kopfbauteil (15) separat gefertigt sind und bei der Herstellung dauerhaft miteinander verbunden wurden, insbesondere im Presssitz zusammengefügt und/oder verklebt wurden.

## Claims

1. Assembly (70) comprising a ball lock pin (1) and at least two structures (51, 52) to be secured against shearing, the ball lock pin (1) comprising
- an operating portion (2), wherein the operating portion (2) forms a handle (4) on which an operator can grip the ball lock pin (1),
- a shaft portion (3) for engagement in the at least two structures (51, 52), and
- a locking mechanism (6),
wherein the operating portion (2) and the shaft portion (3) are rigidly connected to one another and the operating portion (2) has a contact surface (8), in particular a collar (9), on the end thereof facing the shaft portion (3), for abutting one of the structures (51, 52),
wherein an operating button (5) is formed on the operating portion (2), by means of which the locking mechanism (6) can be actuated and which can be pressed in an axial direction by the operator,
wherein at least one locking ball (7) can be actuated by means of the locking mechanism (6),
and wherein the at least one locking ball (7) protrudes radially from the shaft portion (3) through a recess (14) in the shaft portion (3) in a basic position of the locking mechanism (6), and the at least one locking ball (7) can fall back radially behind the recess (14) in a release position,
**characterized in that**
the at least one locking ball (7), together with the associated recess (14), is formed in an upper half (25) of the shaft portion (3) that faces the operating portion (2),
and **in that** the shaft portion (3) projects through a first structure (51),
wherein the at least one locking ball (7) engages behind a structural edge (72) of the first structure (51) in the basic position,
and wherein the shaft portion (3) further projects through a second structure (52), which is arranged on a side (57) of the first structure (51) that faces away from the operating portion (2), or projects into the second structure (52), and the at least one locking ball (7) does not engage behind the second structure (52),
in particular wherein the contact surface (8) abuts the first structure (51).

2. Assembly (50) comprising a ball lock pin (1) and at least two structures (51, 52) to be secured against shearing, the ball lock pin (1) comprising
- an operating portion (2), wherein the operating portion (2) forms a handle (4) on which an operator can grip the ball lock pin (1),
- a shaft portion (3) for engagement in the at least two structures (51, 52), and
- a locking mechanism (6),
wherein the operating portion (2) and the shaft portion (3) are rigidly connected to one another and the operating portion (2) has a contact surface (8), in particular a collar (9), on the end thereof facing the shaft portion (3), for abutting one of the structures (51, 52),
wherein an operating button (5) is formed on the operating portion (2), by means of which the locking mechanism (6) can be actuated and which can be pressed in an axial direction by the operator,
wherein at least one locking ball (7) can be actuated by means of the locking mechanism (6),
and wherein the at least one locking ball (7) protrudes radially from the shaft portion (3) through a recess (14) in the shaft portion (3) in a basic position of the locking mechanism (6), and the at least one locking ball (7) can fall back radially behind the recess (14) in a release position,
**characterized in that**
the at least one locking ball (7), together with the associated recess (14), is formed in an upper half (25) of the shaft portion (3) that faces the operating portion (2),
**in that** the assembly further comprises an adapter component (41; 47), wherein the adapter component (41; 47) has
- an adapter recess (42) for passage of the shaft portion (3), and
- a securing edge (43) in the adapter recess (42) for engagement behind the adapter component (41; 47) by the at least one locking ball (7) in the basic position of the locking mechanism (6),
**in that** the adapter component (41; 47) is rigidly attached, in particular screwed or welded, to a first structure (51),
wherein the at least one locking ball (7) engages behind the securing edge (43) of the adapter recess (42) of the adapter component (41; 47) in the basic position,
wherein the shaft portion (3) projects through the adapter component (41; 47) and the first structure (51),
and wherein the shaft portion (3) further projects through a second structure (52), which is arranged on a side (56) of the first structure (51) that faces away from the adapter component (41; 47) and the operating portion (2), or projects into the second structure (52), and the at least one locking ball (7) does not engage behind the second structure,
in particular wherein the contact surface (8) abuts a counter surface (44) of the adapter component (41; 47).

3. Assembly (50) according to claim 2, **characterized in that** the adapter component (41; 47) further comprises a counter surface (44) for abutment against the contact surface (8), and **in that** the axial distance (GSK) between the counter surface (44) and the securing edge (43) corresponds to the axial distance (ASP) between the contact surface (8) and the locking ball (7).

4. Assembly (50) according to either claim 2 or claim 3, **characterized in that** the adapter component (41) has an external thread (45) for screwing the adapter component (41) into one of the structures (51, 52).

5. Assembly (50) according to claim 4, **characterized in that** a maximum radius (RA) of the contact surface (8) of the operating portion (2) is greater than a maximum radius (RG) of the external thread (45) of the adapter component (41).

6. Assembly (50) according to either claim 2 or claim 3, **characterized in that** the adapter component (47) has openings (48) for screwing the adapter component (47) onto one of the structures (51, 52).

7. Assembly (50; 70) according to any of the preceding claims, **characterized in that** the at least one locking ball (7), together with the associated recess (14), is formed in an upper quarter (24) of the shaft portion (3) that faces the operating portion (2).

8. Assembly (50; 70) according to any of the preceding claims, **characterized in that**
the ball lock pin (1) has a head component (15), comprising
- the operating portion (2),
- a head-side shaft part (20) of the shaft portion (3), and
- the locking mechanism (6), wherein the at least one locking ball (7), together with the associated recess (14), is formed in the head-side shaft part (20), and **in that** the ball lock pin (1) further comprises a shaft extension component (16; 16a-16c) which forms an extension-side shaft part (21) of the shaft portion (3).

9. Assembly (50; 70) according to claim 8, **characterized in that** the extension-side shaft part (21) forms at least 75% of the axial length of the shaft portion (3).

10. Assembly (50; 70) according to either claim 8 or claim 9, **characterized in that**
the head-side shaft part (20) has an axial bore (19) which extends to a lower end (26) of the head-side shaft part (20).

11. Assembly (50; 70) according to any of claims 8 to 10, **characterized in that** the extension-side shaft part (21) is formed from solid material.

12. Assembly (50; 70) according to any of claims 8 to 11, **characterized in that** the shaft extension component (16; 16a-16c) and the head component (15) are manufactured separately and have been permanently connected to one another, in particular joined together in a press-fit and/or glued together, during production.

## Revendications

1. Ensemble (70) comprenant un boulon de verrouillage à billes (1) et au moins deux structures (51, 52) à protéger contre le cisaillement, avec le boulon de verrouillage à billes (1) comprenant
- une section d'actionnement (2), la section d'actionnement (2) formant une poignée (4) au niveau de laquelle un opérateur peut saisir le boulon de verrouillage à billes (1),
- une section d'axe (3) pour une mise en prise dans les au moins deux structures (51, 52), et
- un mécanisme d'arrêt (6),
la section d'actionnement (2) et la section d'axe (3) étant reliées l'une à l'autre de manière rigide et la section d'actionnement (2) présentant à son extrémité tournée vers la section d'axe (3) une surface d'appui (8), en particulier une collerette (9), pour un appui contre l'une des structures (51, 52), un bouton d'actionnement (5) étant formé sur la section d'actionnement (2), à l'aide duquel le mécanisme d'arrêt (6) peut être actionné, et pouvant être enfoncé dans une direction axiale par l'opérateur, au moins une bille de verrouillage (7) pouvant être actionnée avec le mécanisme d'arrêt (6), et dans une position de base du mécanisme d'arrêt (6), ladite au moins une bille de verrouillage (7) dépassant radialement de la section d'axe (3) à travers un évidement (14) dans la section d'axe (3), et dans une position de libération, ladite au moins une bille de verrouillage (7) pouvant retomber radialement derrière l'évidement (14),
**caractérisé en ce que**
ladite au moins une bille de verrouillage (7) et l'évidement correspondant (14) sont formés dans une moitié supérieure (25) de la section d'axe (3) qui est tournée vers la section d'actionnement (2), et **en ce que** la section d'axe (3) traverse une première structure (51), ladite au moins une bille de verrouillage (7) vient en prise derrière un bord de structure (72) de la première structure (51) dans la position de base, et la section d'axe (3) traverse en outre une seconde structure (52) qui est agencée sur un côté (57) de la première structure (51) opposé à la section d'actionnement (2) ou fait saillie dans la seconde structure (52), et la seconde structure (52) n'est pas mise en prise par l'arrière par ladite au moins une bille de verrouillage (7), la surface d'appui (8) s'appliquant en particulier contre la première structure (51).

2. Ensemble (50) comprenant un boulon de verrouillage à billes (1) et au moins deux structures (51, 52) à protéger contre le cisaillement, avec le boulon de verrouillage à billes (1) comprenant
- une section d'actionnement (2), la section d'actionnement (2) formant une poignée (4) au niveau de laquelle un opérateur peut saisir le boulon de verrouillage à billes (1),
- une section d'axe (3) pour une mise en prise dans lesdites au moins deux structures (51, 52), et
- un mécanisme d'arrêt (6),
la section d'actionnement (2) et la section d'axe (3) étant reliées l'une à l'autre de manière rigide et la section d'actionnement (2) présentant à son extrémité tournée vers la section d'axe (3) une surface d'appui (8), en particulier une collerette (9), pour un appui contre l'une des structures (51, 52), un bouton d'actionnement (5) étant formé sur la section d'actionnement (2), à l'aide duquel le mécanisme d'arrêt (6) peut être actionné, et pouvant être enfoncé dans une direction axiale par l'opérateur, au moins une bille de verrouillage (7) pouvant être actionnée avec le mécanisme d'arrêt (6), et dans une position de base du mécanisme d'arrêt (6), ladite au moins une bille de verrouillage (7) dépassant radialement de la section d'axe (3) à travers un évidement (14) dans la section d'axe (3), et dans une position de libération, ladite au moins une bille de verrouillage (7) pouvant retomber radialement derrière l'évidement (14), **caractérisé en ce que**
ladite au moins une bille de verrouillage (7) et l'évidement correspondant (14) sont réalisés dans une moitié supérieure (25) de la section d'axe (3), qui est tournée vers la section d'actionnement (2), **en ce que** l'ensemble comprend en outre un composant adaptateur (41 ; 47), le composant adaptateur (41 ; 47) présentant
- un évidement d'adaptateur (42) pour la traversée de la section d'axe (3), et
- un bord de sécurisation (43) dans l'évidement d'adaptateur (42) pour une mise en prise par l'arrière du composant adaptateur (41 ; 47) avec ladite au moins une bille de verrouillage (7) dans la position de base du mécanisme d'arrêt (6), **en ce que** le composant adaptateur (41 ; 47) est fixé de manière rigide à une première structure (51), en particulier vissé ou soudé, ladite au moins une bille de verrouillage (7), dans la position de base, venant en prise par l'arrière avec le bord de sécurisation (43) de l'évidement d'adaptateur (42) du composant d'adaptateur (41 ; 47), la section d'axe (3) traversant le composant adaptateur (41 ; 47) et la première structure (51), et la section d'axe (3) traversant en outre une seconde structure (52), qui est agencée sur un côté (56) de la première structure (51) opposé au composant adaptateur (41 ; 47) et à la section d'actionnement (2), traverse ou pénètre dans la seconde structure (52), et la seconde structure n'étant pas mise en prise par l'arrière par ladite au moins une bille de verrouillage (7), la surface d'appui (8) se trouvant en particulier contre une surface antagoniste (44) du composant adaptateur (41 ; 47).

3. Ensemble (50) selon la revendication 2, **caractérisé en ce que** le composant adaptateur (41 ; 47) comprend en outre une surface antagoniste (44) pour un appui au niveau de la surface d'appui (8), et **en ce que** la distance axiale (GSK) entre ladite surface antagoniste (44) et ledit bord de sécurisation (43) correspond à la distance axiale (ASP) entre ladite surface d'appui (8) et ladite bille de verrouillage (7).

4. Ensemble (50) selon la revendication 2 ou 3, **caractérisé en ce que** l'élément adaptateur (41) présente un filetage extérieur (45) pour un vissage de l'élément adaptateur (41) dans l'une des structures (51, 52).

5. Ensemble (50) selon la revendication 4, **caractérisé en ce qu'**un rayon maximal (RA) de la surface d'appui (8) de la section d'actionnement (2) est supérieur à un rayon maximal (RG) du filetage extérieur (45) du composant adaptateur (41).

6. Module (50) selon la revendication 2 ou 3, **caractérisé en ce que** le composant adaptateur (47) présente des ouvertures (48) pour le vissage du composant adaptateur (47) sur l'une des structures (51, 52).

7. Ensemble (50 ; 70) selon l'une quelconque des revendications précédentes, **caractérisé en ce que** ladite au moins une bille de verrouillage (7) et l'évidement (14) associé sont réalisés dans un quart supérieur (24) de la section d'axe (3) qui est tourné vers la section d'actionnement (2).

8. Ensemble (50 ; 70) selon l'une quelconque des revendications précédentes, **caractérisé en ce que** le boulon de verrouillage à billes (1) présente un composant de tête (15) comprenant la section d'actionnement (2),
- une partie d'axe côté tête (20) de la section d'axe (3), et
- le mécanisme d'arrêt (6), ladite au moins une bille d'arrêt (7) et l'évidement correspondant (14) étant formés dans la partie d'axe côté tête (20), et **en ce que** le boulon de verrouillage à billes (1) présente en outre un composant de prolongement d'axe (16 ; 16a-16c) qui forme une partie d'axe côté prolongement (21) de la section d'axe (3).

9. Ensemble (50 ; 70) selon la revendication 8, **caractérisé en ce que** la partie d'axe côté prolongement (21) forme au moins 75 % de la longueur axiale de la section d'axe (3).

10. Ensemble (50 ; 70) selon la revendication 8 ou 9, **caractérisé en ce que** la partie d'axe côté tête (20) présente un alésage axial (19) qui s'étend jusqu'à une extrémité inférieure (26) de la partie d'axe (20).

11. Ensemble (50 ; 70) selon l'une quelconque des revendications 8 à 10, **caractérisé en ce que** la partie d'axe côté prolongement (21) est réalisée en un matériau plein.

12. Ensemble (50 ; 70) selon l'une quelconque des revendications 8 à 11, **caractérisé en ce que** le composant de prolongement d'axe (16 ; 16a-16c) et le composant de tête (15) sont fabriqués séparément et ont été reliés de manière permanente l'un à l'autre lors de la fabrication, en particulier assemblés par ajustement serré et/ou collés.
